Europäisches Patentamt

**European Patent Office** (11) Numéro de publication: **0 048 205**

Office européen des brevets **A1**

(12) **DEMANDE DE BREVET EUROPEEN**

(21) Numéro de dépôt: **81401418.9**

(22) Date de dépôt: **11.09.81**

(51) Int. Cl.³: **G 02 B 3/08**
**G 02 B 1/06**

(30) Priorité: **12.09.80 FR 8019768**

(43) Date de publication de la demande:
**24.03.82 Bulletin 82/12**

(84) Etats contractants désignés:
**AT BE DE GB IT NL SE**

(71) Demandeur: **Champeau, André**
**7 Rue Puvis-de-Chavannes**
**F-75017 Paris(FR)**

(72) Inventeur: **Champeau, André**
**7 Rue Puvis-de-Chavannes**
**F-75017 Paris(FR)**

(74) Mandataire: **Fruchard, Guy et al,**
**NOVAPAT-CABINET CHEREAU 107, boulevard Péreire**
**F-75017 Paris(FR)**

(54) **Système optique transmissif focalisant hybride.**

㉗ Le système optique est constitué d'un assemblage flottant d'une plaque de verre à vitre (1) et d'une partie focalisante en matériau plastique (2), par exemple en copolymère styrène-acrylonitrile, jointe sans contrainte à la plaque en verre par une couche intermédiaire (3) d'un matériau transparent à viscosité contrôlée et à pouvoir adhésif, par exemple en silicones, l'assemblage étant maintenu par sa périphérie par une structure de cadre (5) avec interposition d'un joint souple (6). Selon une caractéristique particulière, une faible concentration d'une substance anti U.V. est dispersée dans la couche intermédiaire (3).

Application notamment aux concentrateurs pour systèmes de captation d'énergie solaire.

FIG. 1

1.

SYSTEME OPTIQUE TRANSMISSIF FOCALISANT HYBRIDE .

La présente invention concerne les systèmes optiques transmissifs focalisant hybrides, plus particulièrement pour les utilisations de captation de l'énergie solaire.

De nombreuses tentatives ont été faites récemment pour réaliser des lentilles ou éléments de lentille, notamment de type de Fresnel, en matériau plastique, afin de s'affranchir des problèmes, notamment de poids, inhérents aux lentilles de moyennes et grandes dimensions en verre. Les lentilles en polyméthacrylate de méthyle se sont révélées performantes, nonobstant les pertes de transmission par défauts géométriques dus au retrait du matériau utilisé, mais demeurent d'un coût véritablement excessif. Il a également été proposé des systèmes optiques hybrides utilisant une couche de verre formant support et une couche de matériau plastique en résine de silicone formant la partie focalisante optiquement active. Ces systèmes hybrides demeurent toutefois également très onéreux et posent des problèmes de tenue dans le temps au niveau de l'interface entre les deux parties accolées.

La présente invention a précisément pour objet de proposer un système optique transmissif focalisant hybride obviant à ces inconvénients, se caractérisant par un faible coût de fabrication et des performances optiques remarquables, s'affranchissant des problèmes de variations de dilatation et de contraintes des éléments constitutifs du système, et offrant ainsi une tenue mécanique dans le temps mais également une tenue aux U.V. largement améliorées.

Pour ce faire, selon une caractéristique de la présente invention, le système optique transmissif focalisant hybride est constitué d'un assemblage d'une partie d'armature en verre et d'une partie focalisante en un matériau plastique, cette dernière étant jointe sans contrainte à la partie en verre par une couche intermédiaire d'un matériau transparent semi-liquide à viscosité contrôlée et à pouvoir adhésif avec le verre et le matériau plastique.

La présente invention propose donc un assemblage flottant, maintenu suivant ses bords par un cadre avec interposition d'un joint souple, en s'affranchissant ainsi des problèmes de liaison avec solidarisation, par exemple par collage, entre les différents matériaux tenant aux variations de dilatation et de contraintes internes.

Selon une autre caractéristique de la présente invention, une substance anti U.V. est dispersée avec une relativement faible concentration dans la couche intermédiaire de jonction.

Selon la présente invention, il est ainsi possible d'utiliser pour la partie focalisante des matériaux plastiques quelconques en s'affranchissant des critères des sélections de tenue mécanique, puisque c'est la partie en verre qui assume cette fonction, mais également de tenue ou de vieillissement aux ultraviolets, ceux-ci étant absorbés sur une large gamme par la combinaison du verre et de la substance anti U.V. dans la couche intermédiaire, de façon à pouvoir sélectionner les matériaux plastiques en fonction des seuls critères de qualité optique, de prix de revient et de travaillabilité.

Il a en effet été proposé jusqu'à présent d'inclure dans des matériaux plastiques des substances anti U.V., mais cette technique souffre toutefois de deux sortes de limitation graves : tout d'abord, la concentration du matériau anti U.V. dans la peau de la plaque ou de la lentille plastique étant très faible, les premiers microns de cette dernière ne sont en fait pas protégés, et, d'autre part, les matériaux anti U.V. existants ne protègent en fait pas au-dessous de 300 nanomètres et laissent donc ainsi le passage à une gamme de longueurs d'onde susceptibles d'affecter grandement la qualité optique et mécanique du matériau plastique.

Outre les avantages au plan mécanique, tenant à l'assemblage flottant, de la présente invention, celle-ci prévoit en outre une parfaite complémentarité entre le rôle propre de filtration de la partie en verre et de la substance anti U.V. dispersée dans la couche intermédiaire, puisque le verre ordinaire bloque normalement les rayonnements au-dessous de 320 nanomètres, la plage 320 à 400 nanomètres étant coupée de façon parfaitement efficace par la couche intermédiaire renfermant la substance anti U.V. On peut donc ainsi utiliser des matières plastiques courantes telles que le polystyrène ou les copolymères styrène-acrylonitrile, dont les qualités optiques sont satisfaisantes, leur sensibilité aux rayonnements ultraviolets pouvant être ignorée grâce au filtrage efficace en amont de la partie focalisante en matériau plastique.

D'autres caractéristiques et avantages de la présente invention ressortiront de la description suivante de modes de réalisation donnés à titre illustratif mais nullement limitatif faite en relation avec les dessins annexés sur lesquels :

La figure 1 représente schématiquement en coupe transversale un système optique transmissif focalisant hybride selon la présente invention; et

La figure 2 représente une courbe de transmission typique d'un tel système optique.

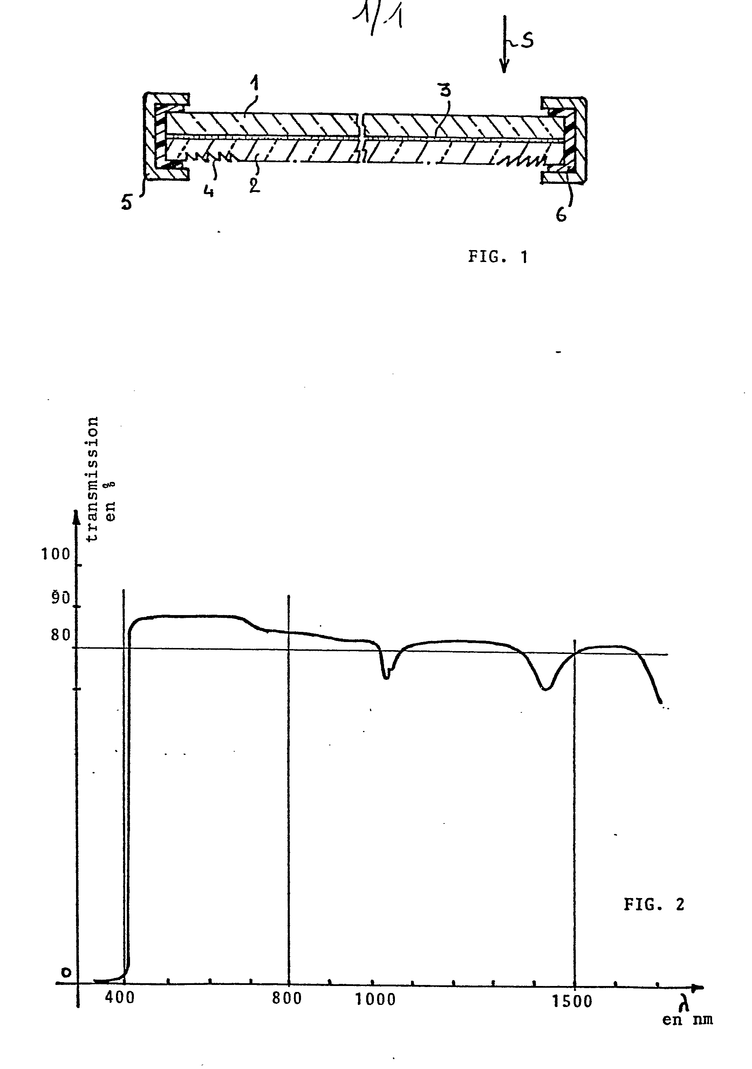

Comme représenté sur la figure 1, le système optique selon la présente invention est constitué d'un assemblage flottant d'une plaque d'armature en verre 1 et d'une plaque en matériau plastique focalisante 2 jointe sans contraintes à la plaque en verre c'est-à-dire maintenue plaquée contre celle-ci par une couche intermédiaire 3 de faible épaisseur en un matériau transparent liquide ou semi-liquide à viscosité contrôlée et à pouvoir adhésif avec le verre et le matériau plastique.La plaque en verre 1 est destinée à être orientée du côté du rayonnement solaire S,la face opposée de la plaque en matériau plastique 2 présentant des indentations 4 pour réaliser une lentille circulaire,du type Fresnel,ou linéaire.

Typiquement,la plaque focalisante 2 est réalisée en polystyrène ou en copolymère styrène-acrylonitrile,quoique les résines acryliques ou silicones puissent également être utilisées.La couche intermédiaire 3 est réalisée en un matériau à viscosité contrôlée choisi en fonction de sa tension superficielle et de ces caractéristiques d'adhésivité vis-à-vis du verre et du matériau plastique de la plaque focalisante 2.Dans un mode de réalisation particulier,la couche intermédiaire est réalisée en silicone,tel que le produit à deux composants commercialisé sous l'appellation RTV 132 par la Société Industrielle des Silicones dont la viscosité peut être réglée avec précision.Dans un autre mode de réalisation particulier,la couche intermédiaire est constituée de polyisobutylène,tel que celui commercialisé sous l'appellation NX 20029 par la société dite Nyco S.A.Utilisation peut également être faite de produits organiques tels que certaines coupes de paraffine, certains plastifiants ou des polymères liquides tels que des polyoléfines.La plaque de verre 1 est réalisée en verre à vitre standard dit "float-glass".L'épaisseur de la plaque de verre 1 est comprise entre environ 2 et 5 mm,l'épaisseur minima locale à la base des indentations 4 de la plaque focalisante 2 étant comprise entre 0,5 et 3 mm.L'épaisseur de la couche intermédiaire 3 est déterminée en fonction du matériau constitutif utilisé et est comprise entre 2/100ème et 15/100 ème de mm,typiquement entre 5 et 10 centièmes pour le silicone susmentionné dit RTV 132.L'assemblage optique est maintenu par une structure de cadre périphérique constituée de profilés en U 5 avec interposition d'un joint souple 6,par exemple en silicone,avantageusement réalisé également sous la forme d'une cornière en U avec des ailes débordant sur les faces de l'assemblage optique.

Dans la couche intermédiaire 3,est dispersée une substance absorbant les ultra-violets,par exemple un benzo-triazole tel que celui commercialisé sous l'appellation TINUVIN 328 par la société CIBA-GEIGY ou le matériau anti-U.V. du type A commercialisé par la Société Française d'Orga-nosynthèse,convenant particulièrement à la couche intermédiaire en polyisobutylène.Selon l'efficacité recherchée pour le filtrage anti U.V.,la concentration de cette substance anti U.V. dans la couche intermédiaire est comprise entre 0,5 et 6 %,typiquement entre 2 et 5 %.

On a représenté sur la figure 2,la courbe de transmission en fonction de la longueur d'onde $\lambda$ d'un assemblage verre-silicone-SAN selon la présente invention incorporant une concentration de 2,5 % de matériau anti U.V. dit TINUVIN dans la couche intermédiaire.On constate le parfait filtrage du rayonnement au-dessous de 400 nanomètres,réalisé au voisinage de cette valeur par le matériau anti U.V. de la couche intermédiaire,et le facteur de transmission supérieur à 85% dans la plage visible,le coefficient de transmission dans le proche infrarouge demeurant supérieur à 80 % en moyenne jusqu'au delà de 1500 nm.

Les performances de ce système sont autorisées par la réduction des défauts géométriques permises par le faible retrait du polystyrène ou du styrène-acrylonitrile,la transmission pouvant être rendue voisine de 90 % en soumettant les surfaces externes du système optique à un traitement anti-reflet,par exemple par dépôt sous vide de fluorure de magnésium ou toute autre technique adéquate.En particulier, la face dentée de la partie active de la lentille peut être pourvue d'un revêtement par dépôt ou sous forme de film d'une résine fluorée plastique du type dit FEP ayant un faible indice de réfraction, de l'ordre de 1,345, ce qui permet de ramener les pertes par réflexion de la face de sortie à une valeur inférieure à 2,20 %.

Quoique la présente invention ait été décrite en relation avec des modes de réalisation particuliers,elle ne s'en trouve pas limitée mais est au contraire susceptible de modifications et de variantes qui apparaîtront à l'homme de l'art.

REVENDICATIONS

1 - Système optique transmissif focalisant hybride, comprenant un assemblage d'une partie d'armature en verre et d'une partie focalisante en un matériau plastique, caractérisé en ce que la partie en matériau plastique (2) est jointe sans contraintes à la partie en verre (1) par une couche intermédiaire (3) de matériau transparent à viscosité contrôlée et à pouvoir adhésif avec le verre et le matériau plastique.

2 - Système optique selon la revendication 1, caractérisé en ce que l'assemblage (1-3-2) est maintenu par sa périphérie par une structure de cadre (5) avec interposition d'un joint souple (6).

3 - Système optique selon la revendication 2, caractérisé en ce que les éléments de cadre (5) ont une section transversale en forme de U.

4 - Système optique selon l'une quelconque des revendications précédentes, caractérisé en ce que le matériau plastique de la partie focalisante (2) est choisi parmi le groupe comprenant les homopolymères ou copolymères de styrène.

5 - Système optique selon l'une quelconque des revendications précédentes, caractérisé en ce que le matériau de la couche intermédiaire (3) est choisi parmi le groupe comprenant les silicones, les coupes de paraffine et les polyoléfines.

6 - Système optique selon l'une quelconque des revendications précédentes, caractérisé en ce que l'épaisseur de la couche intermédiaire est comprise entre environ 2/100ème et 15/100ème de mm.

7 - Système optique selon l'une quelconque des revendications précédentes, caractérisé en ce que la partie en verre a une épaisseur comprise entre 2 et 5 mm d'épaisseur.

8 - Dispositif selon la revendication 7, caractérisé en ce que la partie focalisante a une épaisseur minimale locale moyenne comprise entre 0,5 et 3 mm.

9 - Système optique selon l'une quelconque des revendications précédentes, caractérisé en ce qu'une substance anti U.V. est dispersée dans la couche intermédiaire (3).

10 - Système optique selon la revendication 9, caractérisé en ce que la substance anti U.V. est un benzotriazole.

11 - Système optique selon la revendication 10, caractérisé en ce que la concentration de la substance anti U.V. dans la couche intermédiaire (3) est comprise entre 0,5 et 5 % en poids.

12 - Système optique selon l'une quelconque des revendications précédentes, caractérisé en ce qu'au moins une des faces externes de l'assemblage est traitée anti-reflets.

0048205

1/1

FIG. 1

FIG. 2

| DOCUMENTS CONSIDERES COMME PERTINENTS | | | CLASSEMENT DE LA DEMANDE (Int Cl.³) |
|---|---|---|---|
| Categorie | Citation du document avec indication, en cas de besoin, des parties pertinentes | Revendica-tion concernee | |
| | GB - A - 2 021 807 (RCA CORP.) <br> * page 1, lignes 5 à 55 * <br> & FR - A - 2 427 620 · <br> -- | 1,4, <br> 7-8 | G 02 B 3/08 <br> G 02 B 1/06 |
| A | FR - A1 - 2 412 859 (A. GOLDIE) <br> * page 6, lignes 6 à 12 * <br> -- | 1-3 | |
| A | GB - A - 1 362 757 (EASTMAN KODAK CO.) <br> * page 1, lignes 69 à 88 * <br> -- | 1 | TECHNICAL FIELDS SEARCHED (Int. Cl.³) |
| A | DE - A - 2 346 497 (BUCKBEE-MEARS CO.) <br> * page 2 * <br> -- | 4, <br> 9-10 | G 02 B 1/00 <br> G 02 B 3/00 <br> G 02 B 5/00 |
| A | DE - A1 - 2 538 809 (BBC AG) <br> * fig. 2 * <br> ---- | 5 | |

CATEGORIE DES DOCUMENTS CITES

X: particulièrement pertinent

A: arrière-plan technologique

O: divulgation non-écrite

P: document intercalaire

T: théorie ou principe à la base de l'invention

E: demande faisant interférence

D: document cite dans la demande

L: document cité pour d'autres raisons

&: membre de la même famille, document correspondant

Le present rapport de recherche a eté établi pour toutes les revendications

| Lieu de la recherche | Date d'achevement de la recherche | Examinateur |
|---|---|---|
| Berlin | 03-12-1981 | BOTTERILL |

EPO Form 1503.1 06.78